(19) Europäisches Patentamt
European Patent Office
Office européen des brevets

(11) EP 3 742 527 B1

(12) **EUROPEAN PATENT SPECIFICATION**

(45) Date of publication and mention of the grant of the patent:
**23.03.2022 Bulletin 2022/12**

(21) Application number: **19831497.3**

(22) Date of filing: **02.07.2019**

(51) International Patent Classification (IPC):
***H01M 4/13*** *(2010.01)* ***H01M 4/134*** *(2010.01)*
***H01M 4/62*** *(2006.01)* ***H01M 4/66*** *(2006.01)*
***H01M 12/08*** *(2006.01)*

(52) Cooperative Patent Classification (CPC):
**H01M 4/134; H01M 4/382; H01M 4/62; H01M 4/622; H01M 4/661; H01M 10/052; H01M 10/4235;** H01M 2004/027; Y02E 60/10

(86) International application number:
**PCT/KR2019/008063**

(87) International publication number:
**WO 2020/009435 (09.01.2020 Gazette 2020/02)**

(54) **ANODE FOR LITHIUM METAL BATTERY, MANUFACTURING METHOD OF THE SAME, AND LITHIUM METAL BATTERY INCLUDING THE SAME**

ANODE FÜR EINE LITHIUMMETALLBATTERIE, VERFAHREN ZUR HERSTELLUNG DAVON UND LITHIUMMETALLBATTERIE DAMIT

ANODE POUR BATTERIE AU LITHIUM MÉTALLIQUE, SON PROCÉDÉ DE FABRICATION ET BATTERIE AU LITHIUM MÉTALLIQUE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2018 KR 20180077925**
**01.07.2019 KR 20190078784**

(43) Date of publication of application:
**25.11.2020 Bulletin 2020/48**

(73) Proprietor: **LG Energy Solution Ltd.**
**07335 Seoul (KR)**

(72) Inventors:
- **YOON, Jong Keon**
  **Daejeon 34122 (KR)**
- **HAH, Hoejin**
  **Daejeon 34122 (KR)**
- **YUN, Hyunwoong**
  **Daejeon 34122 (KR)**
- **CHOI, Hyunjun**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**JP-A- H1 140 162** **KR-A- 20150 050 507**
**KR-A- 20170 117 649** **KR-A- 20180 046 204**
**US-A1- 2018 040 900**

- **SONG, J. et al.: "Ionomer-liquid electrolyte hybrid ionic conductor for high cycling stability of lithium metal electrodes", Scientific reports, vol. 5, 2015, pages 1-9, XP055674113, DOI: 10.1038/srep14458**
- **LEE, H. et al.: "A simple composite protective layer coating that enhances the cycling stability of lithium metal batteries", Journal of Power Sources, vol. 284, 2015, pages 103-108, XP055674143,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 742 527 B1

## Description

### [Technical Field]

### Cross-reference to related application(s)

This application claims priority to and the benefit of Korean Patent Application No. 10-2018-0077925 filed in the Korean Intellectual Property Office on 7/4/2018, and Korean Patent Application No. 10-2019-0078784 filed in the Korean Intellectual Property Office on July 01, 2019.

The present invention relates to a negative electrode for a lithium metal battery, a manufacturing method thereof, and a lithium metal battery including the same.

### [Background Art]

A lithium metal battery is a battery to which a negative electrode active material made of a lithium metal (Li-metal) or a lithium alloy (Li-alloy) is applied, and has an advantage of having a very high theoretical energy capacity.

However, due to characteristics of lithium which is a substance for a negative electrode active material, in contrast to a case where a negative electrode active material of another substance is applied, the lithium metal battery has non-uniform current distribution on a surface of a negative electrode thereof, and thus lithium is deposited only on a specific portion of the negative electrode, so that extreme growth of lithium dendrites, which are a dendritic precipitate, occurs, resulting in poor cycle-life characteristics of the battery.

On the other hand, since lithium has a very low melting point, the negative electrode may be locally or entirely melted by heat generation during operation of the lithium metal battery, which may cause a short circuit between the negative electrode and a positive electrode, and thus safety thereof is also weak compared to a battery to which a negative electrode active material of another substance is applied.

Accordingly, the lithium metal battery has not yet been widely used, and the negative electrode requires improvement for commercialization. US2018040900 teaches a graphene oxide-bonded metal foil current collector in a battery or supercapacitor, comprising: (a) a free-standing, non-supported thin metal foil having a thickness from 1 μm to 30 μm and two primary surfaces; and (b) a thin film of graphene oxide chemically bonded to at least one of the two primary surfaces without using a binder or adhesive wherein the primary surface does not contain a metal oxide layer.

### [Disclosure]

An exemplary embodiment of the present invention has been made in an effort to not only allow electrodeposition and desorption of lithium to be uniformly performed on a surface of a negative electrode by forming a passivation layer including specific components on the surface thereof, but also to suppress melting of uniformly electrodeposited lithium and ultimately improve the cycle-life characteristic and thermal stability of a lithium metal battery.

Specifically, in the exemplary embodiment of the present invention, the negative electrode for the lithium metal battery including a negative electrode current collector, and a passivation layer including a halogen-based flame retardant, a ceramic, and an organic binder, is manufactured.

However, in the passivation layer, a volume ratio of the ceramic and the organic binder is limited to a specific range.

The negative electrode for the lithium metal battery according to the exemplary embodiment may contribute to simultaneously improving the cycle-life characteristic and thermal stability of the lithium metal battery including the same.

Specifically, the passivation layer is formed on one surface or opposite surfaces of the negative electrode for the lithium metal battery according to the exemplary embodiment, and the passivation layer including the ceramic and the organic binder with the volume ratio that is controlled to the specific range may contribute to the improvement in the cycle-life of the battery, and further including the halogen-based flame retardant that implements a flame retardant effect in a different manner from that of the absorbent material, thereby enhancing the heat resistance of the battery.

### [Description of the Drawings]

FIG. 1A to FIG. 1C respectively illustrate scanning electron microscope (SEM) images of Negative Electrode Samples 1 to 3 according to Manufacture Example 1.

FIG. 1D illustrates optical microscope images of passivation layers (coated surfaces) of Negative Electrode Samples 3 and 4 according to Manufacture Example 1 (left: Sample 3, right: Sample 4).

FIG. 2 illustrates results of thermal stability evaluations of lithium metal batteries according to Example 2 and Comparative Examples 2 and 4.

**[Mode for Invention]**

In the present specification, unless explicitly described to the contrary, the word "comprise" and variations such as "comprises" or "comprising" will be understood to imply the inclusion of stated elements but not the exclusion of any other elements. As used throughout the present specification, terms such as "about", "substantially", and the like that are specific to the reference means in manufacturing and material tolerances when present is used as in the figure or a figure close means, the understanding of the present accurate or is used to prevent the use of unfair self absolute levels of unscrupulous infringers mentioned the disclosure of violations to help. As used throughout the present specification, "step to" or "step of" does not mean "step for".

As used throughout the present specification, it does not represent the term of "a combination of (s)"contained in a Markush format, means one or more of the mixture or combination is selected from the group consisting of the components described in the representation of the town Markush form, It is meant to include at least one selected from the group consisting of the above components.

Exemplary embodiments of the present invention will be described in detail based on the above definitions. However, it should be understood that the exemplary embodiments are merely examples, the present invention is not limited thereto, and the present invention is only defined by the scope of the following claims.

## Negative electrode for lithium metal battery

According to an exemplary embodiment of the present invention, a negative electrode for a lithium metal battery including a negative electrode current collector, and a passivation layer including a halogen-based flame retardant, a ceramic, and an organic binder is provided, and in this case, a volume ratio of the ceramic and the organic binder in the passivation layer is 6.6 or less (but greater than 0).

### Necessity of negative electrode passivation layer for lithium metal battery

Prior to the above embodiment, in a lithium ion battery using a carbon-based material as a negative electrode active material, a negative electrode having an organic/inorganic composite porous coating layer including endothermic inorganic particles and a binder formed on a surface thereof has been suggested.

However, the lithium ion battery using the carbon-based material as the negative electrode active material have less generation of lithium dendrites as compared to a lithium metal battery using lithium as the negative electrode active material. Accordingly, in the case of the lithium ion battery using the carbon-based material as the negative electrode active material, there is little awareness of derivation background of the exemplary embodiment, i.e., suppression of lithium dendrite formation on the surface of the negative electrode active material.

On the other hand, the carbon-based material has a higher melting point than lithium, so there is no need to worry about melting of the carbon-based material at a driving temperature of the battery. However, the endothermic inorganic particles generate water ($H_2O$) during an endothermic process and lithium has high reactivity with water, and thus it is difficult to use a negative electrode active material made of a lithium metal (Li-metal) or a lithium alloy (Li-alloy) together with the endothermic inorganic particles.

The exemplary embodiment relates to a negative electrode for a lithium metal battery, using lithium as the negative electrode active material.

In general, the lithium metal battery using lithium as the negative electrode active material has a nonuniform current distribution on the surface of the negative electrode, and allows a relatively large amount of lithium dendrites to be generated during the operation of the battery as compared with the case of using a carbon-based material as the negative electrode active material. Furthermore, lithium has a low melting point (about 170 °C) compared to the carbon-based material, and it does not easily melt at a driving temperature of the battery, but may not pass a safety test evaluation considering a special situation.

Therefore, in the case of the lithium metal battery, it is necessary to improve the negative electrode from a viewpoint different from the lithium ion battery.

Particularly, specific components capable of preventing the melting of lithium uniformly electrodeposited in a lower portion thereof may be required to be blended to suppress the growth of lithium dendrites in the lower portion, enabling uniform electrodeposition and desorption of lithium, and blocking heat generated from an upper portion thereof (external), such that a passivation layer is formed by coating a surface of the negative electrode of the lithium metal battery.

Herein, the negative electrode of the lithium metal battery may be a lithium-free negative electrode, i.e., a negative electrode made of only the negative electrode current collector. Alternatively, the negative electrode of the

lithium metal battery may be a negative electrode including the negative electrode current collector, and a thin film disposed on the negative electrode current collector.

Hereinafter, the passivation layer of the exemplary embodiment will be described in more detail.

The negative electrode for the lithium metal battery according to the exemplary embodiment may contribute to simultaneously improving the cycle-life characteristic and thermal stability of the lithium metal battery including the same.

Specifically, the passivation layer may be formed on one surface or opposite surfaces of the negative electrode for the lithium metal battery according to the exemplary embodiment, the electrodeposition and desorption of lithium may be uniformly performed under the passivation layer, and melting of uniformly electrodeposited lithium may be suppressed.

Particularly, a volume ratio of the ceramic and the organic binder constituting the passivation layer of the exemplary embodiment is limited to a specific range, and in this case, the passivation layer may be stably bound to the surface of the negative electrode current collector, and may be prevented from detaching even during driving of the battery.

In addition, the passivation layer includes a halogen-based flame retardant, which can enhance the heat resistance of the lithium metal battery in a completely different aspect from a heat absorbing material.

Hereinafter, components constituting the passivation layer of the exemplary embodiment will be described in more detail.

Ceramic

In the case of the ceramic, it is possible to improve the cycle-life characteristic of the lithium metal battery by suppressing the generation of lithium dendrites on the current collector and/or the passivation layer of the exemplary embodiment. In addition, the ceramic may be a substance having heat resistance, and serves to compensate for the poor heat resistance of the organic binder and the flame retardant without deteriorating their functions.

Specifically, the organic binder is a substance that can be shrunk by heat, but as long as it coexists with the ceramic in the passivation layer, heat shrinkage of the organic binder may be suppressed. Further, based on the heat resistance of the ceramic, the heat conduction to the lower portion of the passivation layer including the ceramic may be suppressed, thereby preventing the melting of lithium that is uniformly deposited on the lower portion of the passivation layer.

Non-limiting examples of the ceramic that exhibit this effect include: alumina ($Al_2O_3$), silica ($SiO_2$), bohemite, lithium aluminum germanium phosphate (LAGP), lithium aluminium titanium phosphate (LATP), lithium lanthanum zirconate (LLZO), a sulfide-based ceramic, and hexagonal boron nitride nanoflakes.

When at least one ceramic of the examples is used with the flame retardant, it is possible to accomplish effective heat resistance. Specifically, according to experimental examples described later, in the case of forming a passivation layer by further blending a flame retardant, it is confirmed that the thermal stability of the negative electrode for the lithium battery is further improved in contrast to the case of blending only a ceramic and an organic binder to form a passivation layer. It is inferred that this depends on a synergy effect by simultaneous action of the heat resistance of the ceramic itself and a flame retardant effect of the flame retardant.

Specifically, when using alumina ($Al_2O_3$), which is a ceramic used in the exemplary embodiment to be described, a synergistic effect of thermal stability when combined with the flame retardant may be remarkably expressed based on a heat resistance characteristic of a structure thereof. However, this is only one example, and the exemplary embodiment is not limited thereto.

On the other hand, a particle diameter of the ceramic is not particularly limited, but in view of ease, dispersibility, and the like of the passivation layer forming operation, it is possible to use a ceramic having a particle diameter of more than 0 $\mu$m and 1 $\mu$m or less.

Organic binder

The organic binder not only serves as a support for the passivation layer, but also serves as a binder for effectively binding the flame retardant and the ceramic on the negative electrode current collector.

Specifically, in the case of the organic binder, in order to improve mechanical properties such as flexibility and elasticity, a binder polymer with a low glass transition temperature (Tg) may be used, and an organic binder having a glass transition temperature of, e.g., -200 to 200 °C may be used.

Non-limiting examples of the organic binder that can be used include PVDF-co-HFP (poly(vinylidene fluoride-co-hexafluoropropene)), PVDF (polyvinylidene fluoride), PEO (poly(ethylene oxide)), polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethyl polyvinyl alcohol, cyanoethyl cellulose, cyanoethyl sucrose, pullulan, carboxyl methyl cellulose, an acrylonitrile-styrene-butadiene copolymer, polyimide, a polyacrylonitrile-styrene

copolymer, gelatin, polyethylene glycol, polyethylene glycol dimethyl ether, glyme, or a mixture thereof.

The polyvinylidene fluoride-co-hexafluoropropene may be used as the organic binder, and the polyvinylidene fluoride-co-hexafluoropropene is represented by the following Formula 2, which is well known in the art.

[Chemical Formula 2]

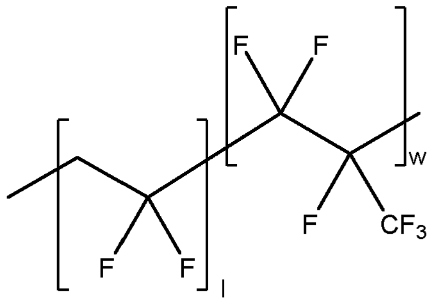

In Formula 2, 5 ≦ l ≦ 10 and 1 ≦ w ≦ 2, wherein a ratio of l:w may be a mass ratio of monomers used to prepare the polyvinylidene fluoride-co-hexafluoropropene (i.e., a co-polymerized mass ratio of PVDF and HFP = l: w).

In addition, any material may be used singly or in combination as long as it exhibits the above-described characteristic.

Volume ratio of ceramic/organic binder

Referring to the experimental examples to be described later, it can be seen that, to form a passivation layer for a negative electrode by using the ceramic and the organic binder, it is necessary to control a mixing ratio thereof in a specific range.

Specifically, the ceramic and the negative electrode current collector are bound by the organic binder, and the ceramic may fail to be bound to the negative electrode current collector and may be dropped when excessive ceramic is used in comparison to the organic binder. In this case, even when a passivation layer is formed on the negative electrode current collector, it will be a brittle passivation layer that will be easily broken.

In fact, it is seen that when the volume ratio of the ceramic and the organic binder is 7 (Sample 5 of Manufacture Example 1), a passivation layer is not formed on the surface of the negative electrode current collector, and when the volume ratio is 6 or less, the passivation layer is well formed on the surface of the negative electrode current collector.

On the other hand, it is seen that as the volume ratio decreases, voids in the passivation layer increase, but as the volume ratio increases, the voids are minimized so that a dense and uniform passivation layer is formed.

In this regard, when the passivation layer for the negative electrode is formed using the ceramic and the organic binder, the higher the volume ratio of the ceramic and the organic binder, the better the formation of a dense and uniform passivation layer to suppress negative electrode dendrites, but the passivation layer may be formed only when the volume ratio is controlled to 6.5 or less, specifically 6.4 or less, 6.3 or less, 6.2 or less, 6.1 or less, and more specifically 6 or less.

In addition, a lower limit for the volume ratio of the ceramic and the organic binder is not particularly limited as long as it exceeds 0, but may be 0.1 or more, 0.2 or more, 0.3 or more, 0.4 or more, or 0.5 or more as in the experimental examples described later.

Halogen flame-based retardant

The halogen-based flame retardant realizes a flame retardant effect by stabilizing radicals occurring in the gas phase instead of absorbing or consuming heat as soon as it is generated inside the battery.

In general, when a material is activated, activating radicals such as hydroxyl (OH) radicals and oxygen (O) radicals are generated, and in this case, latent heat serves as an energy source required for combustion of surrounding flammable materials. However, the halogen-based flame retardant realizes the flame retardant effect in a manner to reduce the concentration of the active radicals and thereby stop the chain reaction. In addition, the halogen-based flame retardant is partially decomposed by the latent heat to generate an incombustible gas, thereby blocking oxygen.

As such, the halogen-based flame retardant performs a different function from the endothermic inorganic particles (e.g., an antimony-containing compound, a metal hydroxide, a guanidine-based compound, a boron-containing compound, and a zinc stannate) that absorb or consume heat as soon as it is generated inside the battery, and may provide excellent thermal stability.

On the other hand, since the halogen-based flame retardant is generally superior in thermal conductivity than the nitrile-based flame retardant, as confirmed in the experimental examples described later, the halogen-based flame retardant may provide better stability than a nitrile-based flame retardant such as hexagonal boron nitride (h-BN).
Non-limiting examples of the halogen-based flame retardants include fluorobenzene, a fluoroionomer, and the like, one or more of which may be used in combination.
For example, the halogen-based flame retardant may include the fluoroionomer (F-ionomer), and the fluoroionomer may use a Nafion-based material represented by Formula 1.

[Chemical Formula 1]

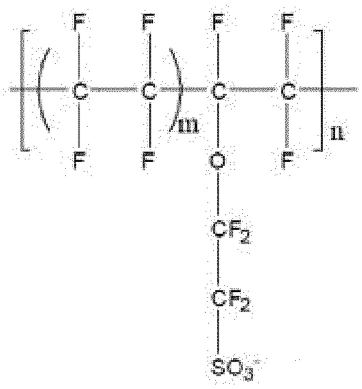

In Formula 1, m:n may be 1:1 to 10:1.
The Nafion-based material represented by Formula 1 is a kind of polymer in which a sulfonic acid group is introduced into a backbone of polytetrafluoroethylene, and is thermally stable, has high chemical resistance, and has high ionic conductivity.
The halogen flame-based retardant may be included at 2 to 50 vol%, specifically 5 to 30 vol%, among in a total volume (100 vol%) of the passivation layer. When this range is satisfied, the function of the halogen-based flame retardant and the other components may be harmonized, but the exemplary embodiment is not limited thereto.

Thickness of passivation layer

According to the exemplary embodiment, a thickness of the passivation layer is not particularly limited, but may be in a range of 0.1 to 10 um. Specifically, the thickness of the passivation layer according to the embodiment may satisfy a lower limit in a range of 0.1 um, 0.2 um, or 1 um, and an upper limit in a range of 10 um, 8 um, or 5 um.

Negative electrode current collector

As mentioned above, in the lithium metal battery, a copper current collector itself or a portion of a surface thereof on which a lithium metal is attached is determined as a negative electrode (Li free anode), charging and discharging is performed by using an electrochemical reaction in which the lithium metal desorbed from the surface of the negative electrode is ionized to move through an electrolyte to a positive electrode (discharging), and lithium ions that have lost electrons at the positive electrode move through the electrolyte to the negative electrode, where they are reduced and electrodeposited (charging) on the surface of the negative electrode.
The copper current collector is generally formed to have a thickness of 3 to 500 μm. Such a copper current collector itself may be used as a negative electrode (Li free anode). When a lithium metal is attached to the surface of the copper current collector as the negative electrode, a method that is well known in the art such as deposition, electrolytic plating, and rolling may be used for attaching the lithium metal.

Method of forming a passivation layer

The method for forming the passivation layer is not particularly limited as long as it is a coating method that is generally known in the battery field. For example, sputtering, dip coating, spray coating, and the like may be used, but the exemplary embodiment is not limited thereto.
According to the exemplary embodiment, a passivation layer of a negative electrode for the lithium metal battery

may be formed on one side of the negative electrode or opposite two surfaces of the negative electrode. When the passivation layer is formed on the opposite two surfaces of the negative electrode in contrast to the case of being formed on one surface thereof, it is practically important because there is an advantage in cell manufacture that increases capacity by stacking multiple layers of positive electrode/separator/negative electrode, but this does not fundamentally limit the exemplary embodiment.

## Lithium metal battery

In another exemplary embodiment of the present invention, a lithium metal battery including the aforementioned negative electrode, an electrolyte solution, and a positive electrode is provided.

As the lithium metal battery includes the aforementioned negative electrode, capacity retention and thermal stability may be improved.

For example, for the lithium metal battery of the exemplary embodiment, when charging with a constant current of 0.3 C until reaching 4.25 V and then discharging with a constant current of 0.5 C until reaching 3 V are performed in a temperature range of 20 to 30 °C as a single charging and discharging cycle, n at a time when a capacity retention rate according to Formula1 below reaches 80 % may be 30 or more, specifically 35 or more, or 40 or more, and more specifically 50 or more.

[Formula 1]

$$\text{Capacity retention rate (\%)} = 100 * \{\text{discharge capacity after n cycles}\} / \{\text{discharge capacity after 1 cycle}\}$$

In addition, the lithium metal battery may explode after at least 60 min have elapsed under conditions where a surface temperature is increased at a rate of 5 °C/min from a fully charged state with a state of charge (SOC) of 100 %, and then is constantly maintained for 30 min from a time point when reaching 130 °C, and is additionally increased at a rate of 5 °C/min.

This is contrasted with a case where a battery to which no passivation layer is applied may explode in less than 20 min as confirmed in the experimental examples described later.

Meanwhile, the electrolyte of the lithium metal battery may be a liquid electrolyte (i.e., an electrolyte solution), or may be a solid electrolyte.

When the electrolyte of the lithium metal battery is the liquid electrolyte, it includes a non-aqueous organic solvent and a lithium salt.

The non-aqueous organic solvent serves as a medium through which ions involved in the electrochemical reaction of the battery may move.

As the non-aqueous organic solvent, when an ether solvent is used as in the experimental examples described later, there is an advantage in improving the cycle-life performance of the lithium metal battery. However, the present invention is not limited thereto, and a carbonate-based, ester-based, ketone-based, alcohol-based, or aprotic solvent may be used. Dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like may be used as the carbonate-based solvent, and methyl acetate, ethyl acetate, n-propyl acetate, 1,1-dimethylethyl acetate, methylpropionate, ethyl propionate, γ-butyrolactone, decanolide, valerolactone, mevalonolactone, caprolactone, and the like may be used as the ester-based solvent. Dimethyl ether, 1,2-dimethoxyethane, dibutyl ether, tetraglyme, diglyme, 2-methyltetrahydrofuran, tetrahydrofuran, etc. may be used as the ether-based solvent, and cyclohexanone, etc. may be used as the ketone-based solvent. In addition, ethyl alcohol, isopropyl alcohol, etc. may be used as the alcohol-based solvent, and nitriles such as R-CN (where R is a C2 to C20 linear, branched, or cyclic hydrocarbon group, and may include a double bond aromatic ring or an ether bond), amides such as dimethylformamide, dioxolanes such as 1,3-dioxolane, and sulfolane may be used as the aprotic solvent.

The non-aqueous organic solvent may be used alone or in combination of more than one, and when mixing more than one, a mixing ratio may be properly adjusted according to desired battery performance, which may be widely understood by those skilled in the art.

In the case of the carbonate-based solvent, it is preferable to use a mixture of a cyclic carbonate and a chain carbonate. In this case, the cyclic carbonate and the chain carbonate may be mixed and used in a volume ratio of about 1:1 to about 1:9, so that performance of the electrolyte solution may be excellent.

The non-aqueous organic solvent may further include the aromatic hydrocarbon-based organic solvent in addition to the carbonate-based solvent. In this case, the carbonate-based solvent and the aromatic hydrocarbon-based organic solvent may be mixed in a volume ratio of about 1:1 to about 30:1.

As the aromatic hydrocarbon-based organic solvent, an aromatic hydrocarbon-based compound of Formula 1 may be used.

[Chemical Formula 1]

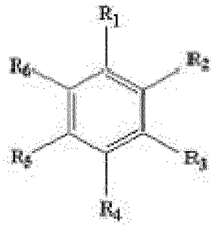

In Formula 1, $R_1$ to $R_6$ are independently hydrogen, a halogen, a C1 to C10 alkyl group, a C1 to C10 haloalkyl group, or a combination thereof, respectively.

As the aromatic hydrocarbon organic solvent, benzene, fluorobenzene, 1,2-difluorobenzene, 1,3-difluorobenzene, 1,4-difluorobenzene, 1,2,3-trifluorobenzene , 1,2,4-trifluorobenzene, chlorobenzene, 1,2-dichlorobenzene, 1,3-dichlorobenzene, 1,4-dichlorobenzene, 1,2,3-trichlorobenzene, 1,2, 4-trichlorobenzene, iodobenzene, 1,2-diiodobenzene, 1,3-diiodobenzene, 1,4-diiobenzene, 1,2,3-triiodobenzene, 1,2,4-Triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4 -Trichlorotoluene, iodotoluene, 1,2-diiodotoluene, 1,3-diiodotoluene, 1,4-diiodotoluene, 1,2,3-tri-iodotoluene, 1,2,4-tri-iodo toluene, xylene, or a combination thereof may be used.

The non-aqueous electrolyte may further include vinylene carbonate or an ethylene carbonate-based compound represented by following Chemical Formula 2 to improve battery cycle-life.

[Chemical Formula 2]

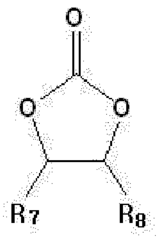

In Chemical Formula 2, $R_7$ and $R_8$ are independently hydrogen, a halogen group, a cyano (CN) group, a nitro ($NO_2$) group, or a C1 to C5 fluoroalkyl group, and at least one of $R_7$ and $R_8$ is a halogen group, a cyano (CN) group, a nitro ($NO_2$) group, or a C1 to C5 fluoroalkyl group.

Representative examples of the ethylene carbonate compound may include difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and the like. When the vinylene carbonate or ethylene carbonate-based compound is further used, an amount thereof may be appropriately adjusted to improve cycle-life.

In the electrolyte solution of the lithium metal battery, the lithium salt is dissolved in the organic solvent, and may serve as a supply source of lithium ions to enable a basic operation of the lithium metal battery of the exemplary embodiment, and may serve to promote the movement of lithium ions between the positive electrode and the negative electrode.

In general, as the lithium salt, a lithium salt that is widely applied to the electrolyte solution may be used. For example, lithium bis(fluorosulfonyl) imide (LiFSI) may be used as in the experimental example described below, and in addition, $LiPF_6$, $LiBF_4$, $LiSbF_6$, $LiAsF_6$, $LiC_4F_9SO_3$, $LiClO_4$, $LiAlO_2$, $LiAlCl_4$, LiN ($C_xF_{2x+1}SO_2$, $C_yF_{2y}+_1SO_2$) (where x and y are natural numbers), LiCl, LiI, $LiB(C_2O_4)_2$ (lithium bis(oxalato) borate (LiBOB)), or a combination thereof may be used.

In addition, in the electrolyte solution, a concentration of the lithium salt may be controlled within a range of 0.1

to 5.0 M. In this range, the electrolyte solution may have appropriate conductivity and viscosity, and the lithium ions may effectively move in the lithium metal battery of the exemplary embodiment. However, this is only an example, and the present invention is not limited thereto.

The electrolyte solution may be impregnated in a porous separator disposed between the negative electrode and the positive electrode. Herein, any porous separator, separating the negative electrode and the positive electrode and providing a passage for the lithium ions, may be used as long as it is commonly used in the lithium battery. In other words, any separator may be used as long as it has low resistance to ion movement of an electrolyte and an excellent ability to impregnate an electrolyte.

For example, it is selected from glass fiber, polyester, Teflon, polyethylene, polypropylene, polytetrafluoroethylene (PTFE), or a combination thereof, and may be in a nonwoven or woven form. For example, for the lithium ion battery, a polyolefin-based polymer separator such as polyethylene or polypropylene is mainly used, and a coated separator including a ceramic component or a polymer material may be used to secure heat resistance or mechanical strength, and may be used as a single or multi-layer structure.

In contrast, when the electrolyte of the lithium metal battery is a solid electrolyte, the solid electrolyte that can be used is not particularly limited.

Regardless of the electrolyte of the lithium metal battery, the positive electrode may include a positive electrode current collector, and a positive electrode mixture layer disposed on the positive electrode current collector.

The positive electrode is manufactured by mixing an active material and a binder, and optionally a conductive material, a filler, and the like in a solvent to form an electrode mixture in a slurry, and applying the electrode mixture to each electrode current collector. Since such an electrode manufacturing method is well known in the art, a detailed description thereof will be omitted.

In the case of the positive electrode active material, any material capable of reversible insertion and detachment of lithium ions may be used, and is not particularly limited. For example, the material may include one of more of composite oxides including cobalt, manganese, nickel, or a combination of metal; and lithium.

Specifically, for example, a compound represented by any one of the following chemical formulas may be used as the positive electrode active material: $Li_aA_{1-b}R_bD_2$ (wherein $0.90 \leqq a \leqq 1.8$ and $0 \leqq b \leqq 0.5$); $Li_aE_{1-b}R_bO_{2-c}D_c$ (wherein $0.90 \leqq a \leqq 1.8$, $0 \leqq b \leqq 0.5$, and $0 \leqq c \leqq 0.05$); $LiE_{2-b}R_bO_{4-c}D_c$ (wherein $0 \leqq b \leqq 0.5$ and $0 \leqq c \leqq 0.05$); $Li_aNi_{1-bc}Co_bR_cD_\alpha$ (wherein $0.90 \leqq a \leqq 1.8$, $0 \leqq b \leqq 0.5$, $0 \leqq c \leqq 0.05$, and $0 < \alpha \leqq 2$); $Li_aNi_{1-bc}Co_bR_cO_{2-\alpha}Z_\alpha$ (wherein $0.90 \leqq a \leqq 1.8$, $0 \leqq b \leqq 0.5$, $0 \leqq c \leqq 0.05$, and $0 < \alpha < 2$); $Li_aNi_{1-bc}Co_bR_cO_{2-\alpha}Z_2$ (wherein $0.90 \leqq a \leqq 1.8$, $0 \leqq b \leqq 0.5$, $0 \leqq c \leqq 0.05$, and $0 < \alpha < 2$); $Li_aNi_{1-bc}Mn_bR_cD_\alpha$ (wherein $0.90 \leqq a \leqq 1.8$, $0 \leqq b \leqq 0.5$, $0 \leqq c \leqq 0.05$, and $0 < \alpha \leqq 2$); $Li_aNi_{1-bc}Mn_bR_cO_{2-\alpha}Z_\alpha$ (wherein $0.90 \leqq a \leqq 1.8$, $0 \leqq b \leqq 0.5$, $0 \leqq c \leqq 0.05$, and $0 < \alpha < 2$); $Li_aNi_{1-bc}Mn_bR_cO_{2-\alpha}Z_2$ (wherein $0.90 \leqq a \leqq 1.8$, $0 \leqq b \leqq 0.5$, $0 \leqq c \leqq 0.05$, and $0 < \alpha < 2$); $Li_aNi_bE_cG_dO_2$ (wherein $0.90 \leqq a \leqq 1.8$, $0 \leqq b \leqq 0.9$, $0 \leqq c \leqq 0.5$, and $0.001 \leqq d \leqq 0.1$); $Li_aNi_bCo_cMn_dG_eO_2$ (wherein $0.90 \leqq a \leqq 1.8$, $0 \leqq b \leqq 0.9$, $0 \leqq c \leqq 0.5$, $0 \leqq d \leqq 0.5$, and $0 \leqq e \leqq 0.1$); $Li_aNiG_bO_2$ (wherein $0.90 \leqq a \leqq 1.8$ and $0.001 \leqq b \leqq 0.1$); $Li_aCoG_bO_2$ (wherein $0.90 \leqq a \leqq 1.8$ and $0.001 \leqq b \leqq 0.1$); $Li_aMnG_bO_2$ (wherein $0.90 \leqq a \leqq 1.8$ and $0.001 \leqq b \leqq 0.1$); $Li_aMn_2G_bO_4$ (wherein $0.90 \leqq a \leqq 1.8$, and $0.001 \leqq b \leqq 0.1$); $QO_2$; $QS_2$; $LiQS_2$; $V_2O_5$; $LiV_2O_5$; $LiTO_2$; $LiNiVO_4$; $Li_{(3-f)}J_2(PO_4)_3$ ($0 \leqq f \leqq 2$); Li $_{(3-f)}Fe_2$ $P(O_4)_3$ ($0 \leqq f \leqq 2$); and $LiFePO_4$.

In the above formula, A indicates Ni, Co, Mn or a combination thereof; R indicates Al, Ni, Co, Mn, Cr, Fe, Mg, Sr, V, a rare earth element, or a combination thereof; D indicates O, F, S, P, or a combination thereof; E indicates Co, Mn, or a combination thereof; Z indicates F, S, P, or a combination thereof; G indicates Al, Cr, Mn, Fe, Mg, La, Ce, Sr, V, or a combination thereof; Q indicates Ti, Mo, Mn, or a combination thereof; T indicates Cr, V, Fe, Sc, Y, or a combination thereof; and J indicates V, Cr, Mn, Co, Ni, Cu, or a combination thereof.

In addition, this compound including a coating layer formed on a surface thereof may be used, or such a compound that is mixed with the compound with the coating layer may be used. The coating layer, which is a coating element compound, may include an oxide of a coating element, a hydroxide of a coating element, an oxyhydroxide of a coating element, an oxycarbonate of a coating element, or a hydroxycarbonate of a coating element. The compounds constituting these coating layers may be amorphous or crystalline. As a coating element included in the coating layer, Mg, Al, Co, K, Na, Ca, Si, Ti, V, Sn, Ge, Ga, B, As, Zr, or a mixture thereof may be used. As such a coating layer forming process, any coating method may be used as long as it can coat the compound with such elements without adversely affecting physical properties of the positive electrode active material, which will be well understood by those in the art, and thus a detailed description thereof will be omitted.

The positive electrode current collector is generally formed to have a thickness of 3 to 500 $\mu$m. Such a positive electrode current collector is not particularly limited as long as it has high conductivity without causing chemical change in the battery, and for example, stainless steel, aluminum, nickel, titanium, calcined carbon, or aluminum or stainless steel, a surface of which is treated with carbon, nickel, titanium, silver, or the like, may be used. The current collector may form fine irregularities on its surface to increase the adhesion of the positive electrode active material, and may be in various forms such as a film, a sheet, a foil, a net, a porous body, a foam, and a non-woven fabric.

The conductive material is not particularly limited as long as it has conductivity without causing chemical change

in the battery, and for example, graphite such as natural graphite or artificial graphite; carbon blacks such as carbon black, acetylene black, ketjen black, channel black, furnace black, lamp black, and summer black; conductive fibers such as carbon fibers and metal fibers; metal powder such as carbon fluoride powder, aluminum powder, and nickel powder; conductive whiskers such as zinc oxide and potassium titanate; conductive metal oxides such as titanium oxide; conductive materials such as polyphenylene derivative; and the like may be used.

The lithium metal battery according to the exemplary embodiment may be used not only in a unit cell used as a power source of a small device, but can also be used as a unit battery in a medium-large battery module including a plurality of battery cells. Furthermore, a battery pack including the battery module may be configured.

Hereinafter, preferred examples of the present invention, comparative examples thereof, and experimental examples for evaluating them will be described. However, the following examples are only exemplary embodiments of the present invention, and the present invention is not limited thereto.

**<Experimental Example 1: Deduction of optimal mixing ratio of ceramic/organic binder>**

**Manufacture Example 1: Manufacture of a negative electrode including a passivation layer for the negative electrode, formed to include a ceramic and an organic binder**

In Manufacture Example 1, a passivation layer was formed on a negative electrode current collector by using the ceramic and the organic binder without using a flame retardant, and four samples were manufactured to have different volume ratios of the ceramic and the organic binder, which were 0.5 (Sample 1), 2 (Sample 2), 6 (Sample 3), and 7 (Sample 4).

When the four samples were manufactured, Commonly, $Al_2O_3$ (D50: 500 nm) was used as the ceramic, PVDF-co-HFP (co-polymerization mass ratio of PVDF and HFP = 5:1) is used as the organic binder, and these were mixed in an NMP solvent to prepare a solution for forming a passivation layer.

When solutions for forming passivation layers were formed, a volume ratio of solution and solid (ceramic+organic binder) was set to be 6:1. In addition, an instrument used for preparing the solutions for forming the passivation layers was a vortex mixer, and the mixing was performed for 5 min under a condition of 2000 rpm or more.

The solutions for forming the passivation layers were applied to opposite surface of each circular copper current collector (Li-free anode) having a cross-section of 1.76 $cm^2$ and a thickness of 10 $\mu$m under a condition of 20 cm/min by using a doctor blade (passivation layer was formed to have a thickness of 10 um per surface of the copper current collector).

Thereafter, they were vacuum-dried for 10 h at 60 °C and rolled, and then were punched to a predetermined size to form a negative electrode.

**Manufacture Example 2: Manufacture of lithium metal battery including each negative electrode of Manufacture Example 1**

$LiNi_{0.8}Mn_{0.1}Co_{0.1}O_2$ is used as the positive electrode active material, carbon black is used as the conductive material, and polyvinylidene fluoride (PVDF) is used as the binder; and a slurry for the positive electrode active material was prepared by adding NMP, which is a solvent, to a mixture obtained by mixing them with a weight ratio of positive electrode active material:conductive material:binder of 94:2:4. The slurry was coated on one surface of an aluminum current collector (thickness: 10 $\mu$m) to a thickness of 79 $\mu$m, and dried, rolled, and punched to a predetermined size to form a positive electrode.

A coin cell in which a separator (porosity: 42 %) of a PE substance is interposed between the positive electrode and each negative electrode sample of Manufacture Example 1 was manufactured. An electrolyte solution obtained by dissolving lithium bis(fluorosulfonyl)imide (LiFSI) of 3.4 M in dimethyl ether was poured into the coin cell.

**Experimental Example 1-1: Surface observation for each negative electrode of Manufacture Example 1**

For Negative Electrode Samples 1 to 3 of Manufacture Example 1, scanning electron microscope (SEM) images of 10,000X magnification were obtained by using a Hitachi S-4800 scanning electron microscope, and each of the SEM images are illustrated in FIG. 1A (Sample 1), FIG. 1B (Sample 2), and FIG. 1C (Sample 3).

In addition, for Negative Electrode Samples 3 and 4 of Manufacture Example 1, images were obtained by using an optical microscope, and the images are illustrated in FIG. 1D (left: Sample 3, right: Sample 4).

Referring to FIG. 1A to FIG. 1D, it can be seen that to form a passivation layer for a negative electrode by using the ceramic and the organic binder, it is necessary to control a mixing ratio thereof in a specific range.

Specifically, the ceramic and the negative electrode current collector are bound by the organic binder, and the ceramic may fail to be bound to the negative electrode current collector and may be dropped when excessive ceramic

is used in comparison to the organic binder. In this case, even when a passivation layer is formed on the negative electrode current collector, it will be a brittle passivation layer that will be easily broken.

In fact, as a result of observing each negative electrode sample of Manufacture Example 1, it was confirmed that no passivation layer was formed on the surface of the negative electrode current collector in FIG. 1D (right: Sample 4), and the passivation layer was formed well on the surface of the negative electrode current collector in FIG. 1A (Sample 1) to FIG. 1C (Sample 3) and FIG. 1D (left: Sample 3).

Meanwhile, in FIG. 1A (Sample 1) to FIG. 1C (Sample 3), it can be seen that the voids in the passivation layer increase as the volume ratio of the ceramic and the organic binder decreases, but the voids are minimized to form a dense and uniform passivation layer as the volume ratio increases.

In this regard, when the passivation layer for the negative electrode is formed using the ceramic and the organic binder, the higher the volume ratio of the ceramic and the organic binder, the better the formation of a dense and uniform passivation layer to suppress negative electrode dendrites, but the passivation layer may be formed only when the volume ratio is controlled to 6.5 or less, specifically 6.4 or less, 6.3 or less, 6.2 or less, 6.1 or less, and more specifically 6 or less.

## Experimental Example 1-2: Evaluation of cycle-life characteristic for each lithium metal battery of Manufacture Example 2

Each lithium metal battery of Manufacture Example 2 was driven under the following conditions. However, in Manufacture Example 2, the Sample 4 in which the passivation layer for the negative electrode was not formed was excluded. Instead, a lithium metal battery was manufactured in the same manner as in Manufacture Example 2 without forming a passivation layer on the surface of the negative electrode current collector, and was driven under the following conditions.

Charge: 0. 3 C, CC/CV, 4.25 V, 1/20 C cut-off
Discharge: 0.5 C, CC, 3.0 V, cut-off

The discharge capacity of each lithium metal battery depending on a charge/discharge cycle was normalized to the discharge capacity of a first cycle, and the results are illustrated in FIG. 1E.

According to FIG. 1D, it can be seen that in Manufacture Example 2, a sample with a higher volume ratio of the ceramic and the organic binder in the passivation layer may increase the number of cycles to reach a rate of 80 % reach. Accordingly, it can be seen that when the passivation layer for the negative electrode is formed by using the ceramic and the organic binder, a higher volume ratio of the ceramic and the organic binder is beneficial for increasing the cycle-life of the lithium metal battery.

However, according to Experimental Example 1-1, the volume ratio of the ceramic and the organic binder should be controlled to at most 6.5 or less, specifically 6 or less, to form the passivation layer. In addition, in the range where the volume ratio of the ceramic and the organic binder is 6.5 or less, specifically 6 or less, it is inferred that as the volume ratio is higher, a dense and uniform passivation layer is formed, which suppresses the generation of negative electrode dendrites, and consequently increases the cycle-life of the lithium metal battery.

## <Experimental Example 2: Effect confirmation of passivation laver including ceramic, organic binder, and halogen-based flame retardant>

## Example 1: Manufacture of a negative electrode including a passivation laver for the negative electrode, formed to include a ceramic, an organic binder, and a halogen-based flame retardant

In Example 1, the passivation layer for the negative electrode was formed on the negative electrode current collector by using the ceramic and the organic binder together with the halogen-based flame retardant.

Specifically, an F-ionomer, which is a kind of halogen-based flame retardant, was used, which is represented by Formula 1.

$Al_2O_3$ (D50: 500 nm) was used as the ceramic, PVDF-co-HFP (co-polymerization mass ratio of PVDF and HFP = 5:1) was used as the organic binder, and these were mixed in an NMP solvent to prepare a solution for forming a passivation layer.

A volume ratio of the organic binder:the ceramic:the halogen flame retardant was set to be 1:5.8:0.2, and these were mixed in an NMP solvent to prepare a solution for forming the passivation layer. In this case, the solution for forming the passivation layer:the volume ratio of the solid content (ceramic + organic binder) was 6:1, and the mixture was mixed for 5 min under a condition of 2000 rpm or more using a vortex mixer.

A circular copper current collector having a cross-section of 1.76 $cm^2$ and a thickness of 10 $\mu m$ and having

opposite surfaces to which lithium metal layers (Li-metal layers) were respectively attached was used (structure of Li/Cu/Li, total thickness is 20 μm, and the thickness of each layer is 20 μm/10 μm/20 μm).

The solution for forming the passivation layer was applied to the opposite surfaces of the copper current collector at 20 cm/min by using a doctor blade (passivation layer was formed to have a thickness of 10 um per surface of the copper current collector).

Thereafter, they were vacuum-dried for 10 h at 60 °C and rolled, and then were punched to a predetermined size to form a negative electrode.

**Example 2: Manufacture of lithium metal battery including negative electrode of Manufacture Example 1**

$LiNi_{0.8}Mn_{0.1}Co_{0.1}O_2$ is used as the positive electrode active material, carbon black is used as the conductive material, and polyvinylidene fluoride (PVDF) is used as the binder; and a slurry for the positive electrode active material was prepared by adding NMP, which is a solvent, to a mixture obtained by mixing them with a weight ratio of positive electrode active material:conductive material:binder of 94:2:4. The slurry was coated on one surface of an aluminum current collector (thickness: 10 μm) to a thickness of 79 μm, and dried, rolled, and punched to a predetermined size to form a positive electrode.

A coin cell in which a separator (porosity: 42 %) of a PE substance is interposed between the positive electrode and the negative electrode of Example 1 was manufactured. An electrolyte solution obtained by dissolving lithium bis(fluorosulfonyl)imide (LiFSI) of 3.4 M in dimethyl ether was poured into the coin cell.

**Comparative Example 1: Manufacture of a negative electrode including a passivation layer for the negative electrode, formed to include a ceramic and an organic binder**

Sample 3 of Manufacture Example 1 (volume ratio of the ceramic and the organic binder = 6) was used as Comparative Example 1.

**Comparative Example 2: Manufacture of lithium metal battery including the negative electrode of Comparative Example 1**

The negative electrode of Comparative Example 1 was used instead of the negative electrode of Example 1, and the others were used depending on the method of Example 2 in order to manufacture a lithium metal battery.

**Comparative Example 3: Manufacture of a negative electrode including a passivation layer for the negative electrode, formed to include a ceramic, an organic binder, and a nitrile-based flame retardant**

Hexagonal boron nitride (h-BN), which is a kind of nitrile-based flame retardant, is used instead of the halogen-based flame retardant of Example 1, and a volume ratio of the organic binder:the ceramic:the nitrile-based flame retardant was 1:4 by using the same ceramic and organic binder as in Example 1.

The others were used depending on the method of Example 1 in order to form a negative electrode.

**Comparative Example 4: Manufacture of lithium metal battery including the negative electrode of Comparative Example 3**

The negative electrode of Comparative Example 3 was used instead of the negative electrode of Example 1, and the others were used depending on the method of Example 2 in order to manufacture a lithium metal battery.

**Experimental Example 2: High temperature storage characteristic**

The lithium metal batteries according to Example 2 and Comparative Examples 2 and 4 were fully charged such that a state of charge (SOC) thereof was 100 %, and a surface temperature of each of the lithium metal batteries was increased at a rate of 5 °C/min and constantly maintained for 30 min when reaching 130 °C, in a hotbox that is capable of adjusting an internal temperature thereof. Thereafter, explosion times of the lithium metal batteries were checked while further increasing the surface temperatures at a rate of 5 °C/min, and results thereof are illustrated in FIG. 2.

Referring to hotbox evaluation results of FIG. 2, it is seen that, in particular, the lithium metal battery of Example 2, in which the halogen-based flame retardant is applied to the passivation layer of the negative electrode, has a voltage drop in a region similar to that of Example 2 and Comparative Example 2, and it is at least maintained for a long time without an explosion and explodes after 60 min. This is compared with the lithium metal batteries exploding in less than 20 min according to Comparative Example 2, in which the passivation layer was not applied, and Comparative Example

4, in which the nitrile-based flame retardant was applied to the passivation layer for the negative electrode. On the other hand, in the case of Comparative Example 4 where the nitrile-based flame retardant was applied to the passivation layer, there was delayed ignition/explosion for several minutes compared to Comparative Example 2 where the passivation layer was not applied, but a time difference therebetween is not so significant that it is a meaningful value.

From the aforementioned experimental examples, it is seen that the passivation layer of the exemplary embodiment may contribute to improvement in a cycle-life of the battery by including the ceramic and the organic binder with the volume ratio that is controlled to a specific range, and may enhance heat resistance of the battery by including a halogen-based flame retardant to implement a flame retardant effect in a different aspect from an absorber.

## Claims

1. A negative electrode for a lithium metal battery, comprising:

   a negative electrode current collector; and
   a passivation layer disposed on the negative electrode current collector to include a halogen-based flame retardant, a ceramic, and an organic binder,
   wherein a volume ratio of the ceramic and the organic binder in the passivation layer is 6.5 or less (but greater than 0).

2. The negative electrode of claim 1, wherein
   the volume ratio of the ceramic and the organic binder in the passivation layer is in a range of 0.5 to 6, inclusive.

3. The negative electrode of claim 1, wherein
   the halogen-based flame retardant is included at 2 to 50 % by volume of a total volume (100 % by volume) of the passivation layer.

4. The negative electrode of claim 1, wherein

   the halogen-based flame retardant
   is at least one selected from the group consisting of a fluoroionomer (F-ionomer) and a fluorobenzene (F-benzene).

5. The negative electrode of claim 4, wherein

   the halogen-based flame retardant includes the fluoroionomer, and
   the fluoroionomer is represented by following Formula 1:

[Chemical Formula 1]

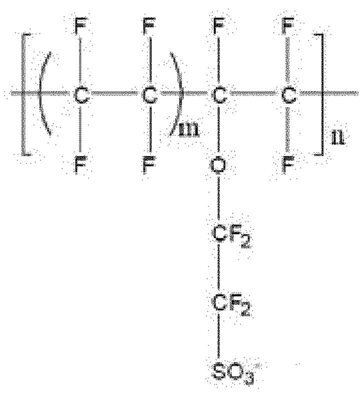

   wherein, in Formula 1, m:n may be 1:1 to 10:1.

6. The negative electrode of claim 1, wherein

the ceramic
is at least of one selected from the group consisting of alumina ($Al_2O_3$), silica ($SiO_2$), bohemite, lithium aluminum germanium phosphate (LAGP), lithium aluminium titanium phosphate (LATP), lithium lanthanum zirconate (LLZO), a sulfide-based ceramic, and hexagonal boron nitride nanoflakes.

**7.** The negative electrode of claim 1, wherein

the organic binder
is at least of one selected from the group consisting of poly(vinylidene fluoride-co-hexafluoropropene) (PVDF-co-HFP), polyvinylidene fluoride (PVDF), and poly(ethylene oxide) (PEO).

**8.** The negative electrode of claim 1, wherein

the cathode current collector
contains lithium or copper.

**9.** The negative electrode of claim 1, wherein

the negative electrode for the lithium metal battery
further includes a Li metal thin film disposed between the negative electrode current collector and the passivation layer.

**10.** A lithium metal battery comprising:

the negative electrode of claim 1;
an electrolyte; and
a positive electrode.

**11.** The lithium metal battery of claim 10, wherein

the positive electrode include a positive electrode active material, and
the positive electrode active material includes one of more of composite oxides including cobalt, manganese, nickel, or a combination of metals; and lithium.

**12.** The lithium metal battery of claim 10, wherein

the electrolyte
includes a lithium salt selected from lithium bis(fluorosulfonyl) imide (LiFSI), $LiPF_6$, $LiBF_4$, $LiSbF_6$, $LiAsF_6$, $LiC_4F_9SO_3$, $LiClO_4$, $LiAlO_2$, $LiAlCl_4$, LiN ($C_xF_{2x+1}SO_2$, $C_yF_{2y+1}SO_2$) (where x and y are natural numbers), LiCl, LiI, $LiB(C_2O_4)_2$ (lithium bis(oxalato) borate (LiBOB)), or a combination thereof; and an ether organic solvent selected from dimethyl ether, 1,2-dimethoxyethane, dibutyl ether, tetraglyme, diglyme, 2-methyltetrahydrofuran, tetrahydrofuran, and a combination thereof.

**13.** The lithium metal battery of claim 10, wherein,

for the lithium metal battery,
when charging with a constant current of 0.3 C until reaching 4.25 V and then discharging with a constant current of 0.5 C until reaching 3 V are performed in a temperature range of 20 to 30 °C as a single charging and discharging cycle, n at a time when a capacity retention rate according to Formula1 below reaches 80 % is 30 or more:

[Formula 1]

Capacity retention rate (%) = 100 * {discharge capacity after n cycles}/{discharge capacity after 1 cycle}

**14.** 15. The lithium metal battery of claim 10, wherein

the lithium metal battery
explodes after at least 60 min have elapsed under conditions where a surface temperature is increased at a rate of 5 °C/min from a fully charged state with a state of charge (SOC) of 100 %, and then is constantly maintained for 30 min from a time point when reaching 130 °C, and is additionally increased at a rate of 5 °C/min.

## Patentansprüche

**1.** Negativelektrode für eine Lithiummetallbatterie, umfassend:

einen Negativelektroden-Stromabnehmer; und
eine auf dem Negativelektroden-Stromabnehmer so abgeschiedene Passivierungsschicht, dass sie einen Flammhemmer auf Halogenbasis, eine Keramik und ein organisches Bindemittel umfasst,
worin das Volumenverhältnis der Keramik und des organischen Bindemittels in der Passivierungsschicht 6,5 oder kleiner (jedoch größer als 0) beträgt.

**2.** Negativelektrode gemäß Anspruch 1, worin
das Volumenverhältnis der Keramik und des organischen Bindemittels in der Passivierungsschicht im Bereich von 0,5 bis 6 einschließlich liegt.

**3.** Negativelektrode gemäß Anspruch 1, worin
der Flammhemmer auf Halogenbasis in einer Menge von 2 bis 50 Vol.-% des Gesamtvolumens (100 Vol.-%) der Passivierungsschicht enthalten ist.

**4.** Negativelektrode gemäß Anspruch 1, worin
der Flammhemmer auf Halogenbasis zumindest einer ist, ausgewählt aus der Gruppe bestehend aus einem Fluorionomer (F-Ionomer) und einem Fluorbenzol (F-Benzol).

**5.** Negativelektrode gemäß Anspruch 4, worin

der Flammhemmer auf Halogenbasis das Fluorionomer umfasst, und
das Fluorionomer durch die folgende Formel 1 dargestellt wird:

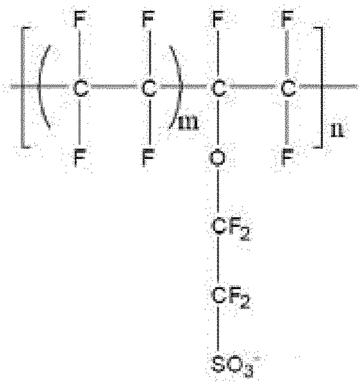

worin in der Formel 1 m:n 1:1 bis 10:1 betragen kann.

**6.** Negativelektrode gemäß Anspruch 1, worin
die Keramik zumindest eine ist, ausgewählt aus der Gruppe bestehend aus Aluminiumoxid ($Al_2O_3$), Siliciumoxid ($SiO_2$), Böhmit, Lithiumaluminiumgermaniumphosphat (LAGP), Lithiumaluminiumtitanphosphat (LATP), Lithiumlanthanzirkonat (LLZO), einer Keramik auf Sulfidbasis und hexagonalen Bornitrid-Nanoflocken.

**7.** Negativelektrode gemäß Anspruch 1, worin
das organische Bindemittel zumindest eines ist, das ausgewählt ist aus der Gruppe bestehend aus Poly(vinylidenfluorid-co-Hexafluorpropen) (PVDF-co-HFP), Polyvinylidenfluorid (PVDF) und Poly(ethylenoxid) (PEO).

**8.** Negativelektrode gemäß Anspruch 1, worin
der Kathoden-Stromabnehmer Lithium oder Kupfer enthält.

**9.** Negativelektrode gemäß Anspruch 1, worin
die Negativelektrode für die Lithiummetallbatterie ferner einen Lithiummetall-Dünnfilm umfasst, angeordnet zwischen dem Negativelektroden-Stromabnehmer und der Passivierungsschicht.

**10.** Lithiummetallbatterie, umfassend:

die Negativelektrode gemäß Anspruch 1;
einen Elektrolyten; und
eine positive Elektrode.

**11.** Lithium-Metallbatterie gemäß Anspruch 10, worin

die Positivelektrode ein Positivelektroden-Aktivmaterial umfasst und
das Positivelektroden-Aktivmaterial ein oder mehrere Kompositoxid(e), die Kobalt, Mangan, Nickel oder eine Kombination von Metallen umfassen; und Lithium umfasst.

**12.** Lithiummetallbatterie gemäß Anspruch 10, worin
der Elektrolyt ein Lithiumsalz, ausgewählt aus Lithium-bis(fluorsulfonyl)imid (LiFSI), $LiPF_6$, $LiBF_4$, $LiSbF_6$, $LiAsF_6$, $LiC_4F_9SO_3$, $LiClO_4$, $LiAlO_2$, $LiAlCl_4$, $LiN(C_xF_{2x+1}SO_2, C_yF_{2y+1}SO_2)$ (worin x und y natürliche Zahlen sind), LiCl, LiI, $LiB(C_2O_4)_2$ (Lithium-bis(oxalato)borat (LiBOB)) oder einer Kombination hiervon; und ein organisches Ether-Lösungsmittel, ausgewählt aus Dimethylether, 1,2-Dimethoxyethan, Dibutylether, Tetraglym, Diglym, 2-Methyltetrahydrofuran, Tetrahydrofuran und einer Kombination hiervon, umfasst.

**13.** Lithium-Metallbatterie gemäß Anspruch 10, worin

bei der Lithiummetallbatterie,
wenn im Temperaturbereich von 20 bis 30°C als Einzellade- und Entladezyklus das Laden mit einem konstanten Strom von 0,3 C durchgeführt wird, bis 4,25 V erreicht werden, und dann das Entladen mit einem konstanten Strom von 0,5 C durchgeführt wird, bis 3 V erreicht werden, n zum Zeitpunkt, bei dem die Kapazitätsretentionsrate gemäß der nachstehenden Formel 1 80 % erreicht, 30 oder mehr beträgt:

[Formel 1]

Kapazitätsretentionsrate (%) = 100 * {Entladekapazität nach n Zyklen}/{Entladekapazität nach 1 Zyklus}.

**14.** Lithiummetallbatterie gemäß Anspruch 10, worin
die Lithiummetallbatterie explodiert, nachdem mindestens 60 min unter Bedingungen verstrichen sind, unter denen die Oberflächentemperatur in einer Geschwindigkeit von 5°C/min von einem vollständig geladenen Zustand mit einem Ladezustand (SOC) von 100 % erhöht wird und dann konstant für 30 min von einem Zeitpunkt beibehalten wird, wenn 130°C erreicht worden sind, und dann zusätzlich in einer Geschwindigkeit von 5°C/min erhöht wird.

## Revendications

**1.** Électrode négative pour batterie au lithium métallique, comprenant :

un collecteur de courant d'électrode négative ; et
une couche de passivation disposée sur le collecteur de courant d'électrode négative de façon à inclure un agent ignifuge à base d'halogène, une céramique et un liant organique,
dans laquelle un rapport volumique de la céramique et du liant organique dans la couche de passivation est

inférieur ou égale à 6,5 (mais supérieur à 0).

**2.** Électrode négative selon la revendication 1, dans laquelle le rapport volumique de la céramique et du liant organique dans la couche de passivation se situe dans une plage de 0,5 à 6, ces valeurs incluses.

**3.** Électrode négative selon la revendication 1, dans laquelle l'agent ignifuge à base d'halogène est inclus à hauteur de 2 à 50 % en volume d'un volume total (100 % en volume) de la couche de passivation.

**4.** Électrode négative selon la revendication 1, dans laquelle

l'agent ignifuge à base d'halogène
est au moins un élément choisi dans le groupe constitué par un fluoroionomère (F-ionomère) et un fluorobenzène (F-benzène).

**5.** Électrode négative selon la revendication 4, dans laquelle

l'agent ignifuge à base d'halogène inclut le fluoroionomère, et
le fluoroionomère est représenté par la formule 1 ci-après :

[Chemical Formula 1]

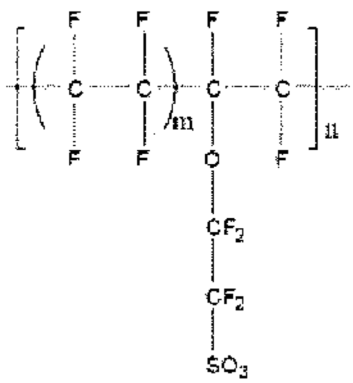

dans laquelle, dans la formule 1, m:n peut se situer dans une plage de 1:1 à 10:1.

**6.** Électrode négative selon la revendication 1, dans laquelle

la céramique
est au moins d'un type choisi dans le groupe constitué par l'alumine ($Al_2O_3$), la silice ($SiO_2$), la boehmite, le phosphate de lithium-aluminium-germanium (LAGP), le phosphate de lithium-aluminium-titane (LATP), le zirconate de lithium-lanthane (LLZO), une céramique à base de sulfure et des nanolamelles de nitrure de bore hexagonal.

**7.** Électrode négative selon la revendication 1, dans laquelle

le liant organique
est au moins d'un type choisi dans le groupe constitué par le poly(fluorure de vinylidène-co-hexafluoropropène) (PVDF-co-HFP), le fluorure de polyvinylidène (PVDF) et le poly(oxyde d'éthylène) (PEO).

**8.** Électrode négative selon la revendication 1, dans laquelle

le collecteur de courant de cathode
contient du lithium ou du cuivre.

**9.** Électrode négative selon la revendication 1, dans laquelle

l'électrode négative pour batterie au lithium métallique
inclut en outre un film mince de Li métallique disposé entre le collecteur de courant d'électrode négative et la couche de passivation.

**10.** Batterie au lithium métallique comprenant :

l'électrode négative selon la revendication 1 ;
un électrolyte ; et
une électrode positive.

**11.** Batterie au lithium métallique selon la revendication 10, dans laquelle

l'électrode positive inclut un matériau actif d'électrode positive, et
le matériau actif d'électrode positive inclut un ou plusieurs des oxydes composites contenant du cobalt, du manganèse, du nickel ou une combinaison de métaux; et du lithium.

**12.** Batterie au lithium métallique selon la revendication 10, dans laquelle l'électrolyte inclut un sel de lithium choisi parmi le bis(fluorosulfonyl)imide de lithium (LiFSI), $LiPF_6$, $LiBF_4$, $LiSbF_6$, $LiAsF_6$, $LiC_4F_9SO_3$, $LiClO_4$, $LiAlO_2$, $LiAlCl_4$, LiN ($CXF_{2x+1}SO_2$, $CyF_{2y+1}SO_2$) (où x et y sont des nombres naturels), LiCl, LiI, $LiB(C_2O_4)_2$ (borate de lithium bis(oxalato) (LiBOB)) ou une combinaison de ceux-ci ; et un solvant organique d'éther choisi parmi l'éther de diméthyle, le 1,2-diméthoxyéthane, l'éther dibutylique, le tétraglyme, le diglyme, le 2-méthyltétrahydrofurane, le tétrahydrofurane et une combinaison de ceux-ci.

**13.** Batterie au lithium métallique selon la revendication 10, dans laquelle,

pour la batterie au lithium métallique,
lorsqu'une charge à un courant constant de 0,3 C jusqu'à atteindre 4,25 V puis une décharge à un courant constant de 0,5 C jusqu'à atteindre 3 V sont effectuées dans une plage de température de 20 à 30 °C en un seul cycle de charge et de décharge, à un moment où un taux de conservation de capacité selon la formule 1 ci-après atteint 80 %, n est supérieur ou égal à 30 :

[Formule 1]

Taux de conservation de capacité (%) = 100 * {capacité de décharge après n cycles}/{capacité de décharge après 1 cycle}

**14.** Batterie au lithium métallique selon la revendication 10, dans laquelle

la batterie au lithium métallique
explose après avoir été exposée au moins 60 min à des conditions dans lesquelles une température de surface est augmentée à une cadence de 5 °C/min à partir d'un état à pleine charge correspondant à un état de charge (SOC) de 100 %, et est ensuite maintenue en permanence pendant 30 minutes à partir d'un instant où elle atteint 130 °C et est encore augmentée à une cadence de 5 °C/min.

FIG. 1A

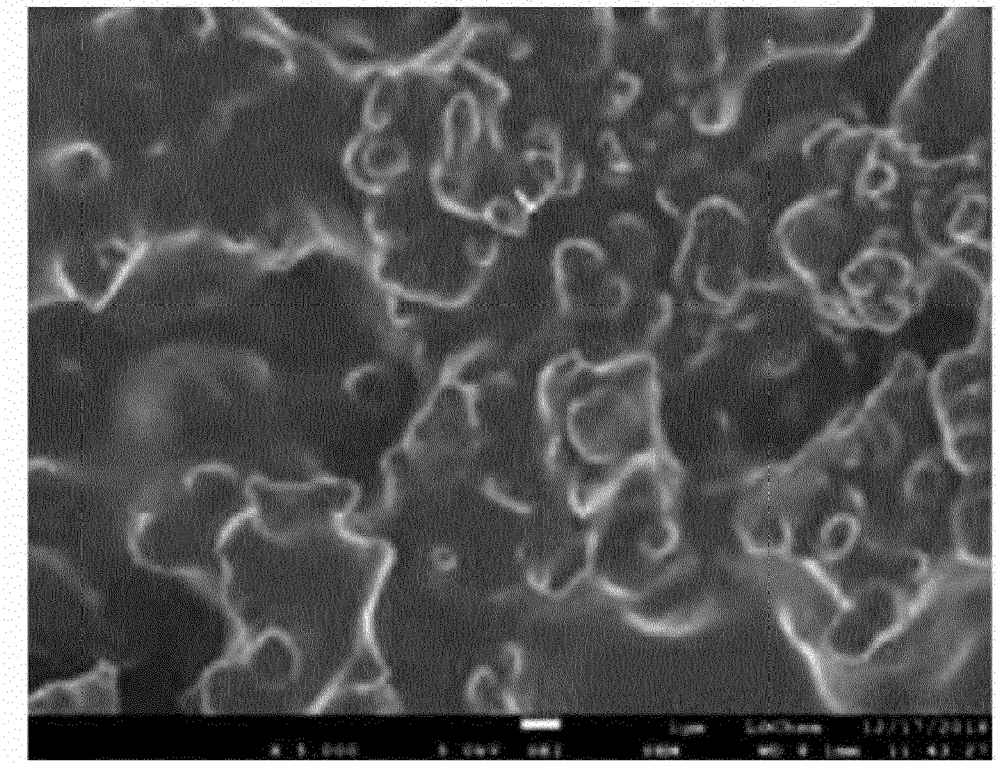

FIG. 1B

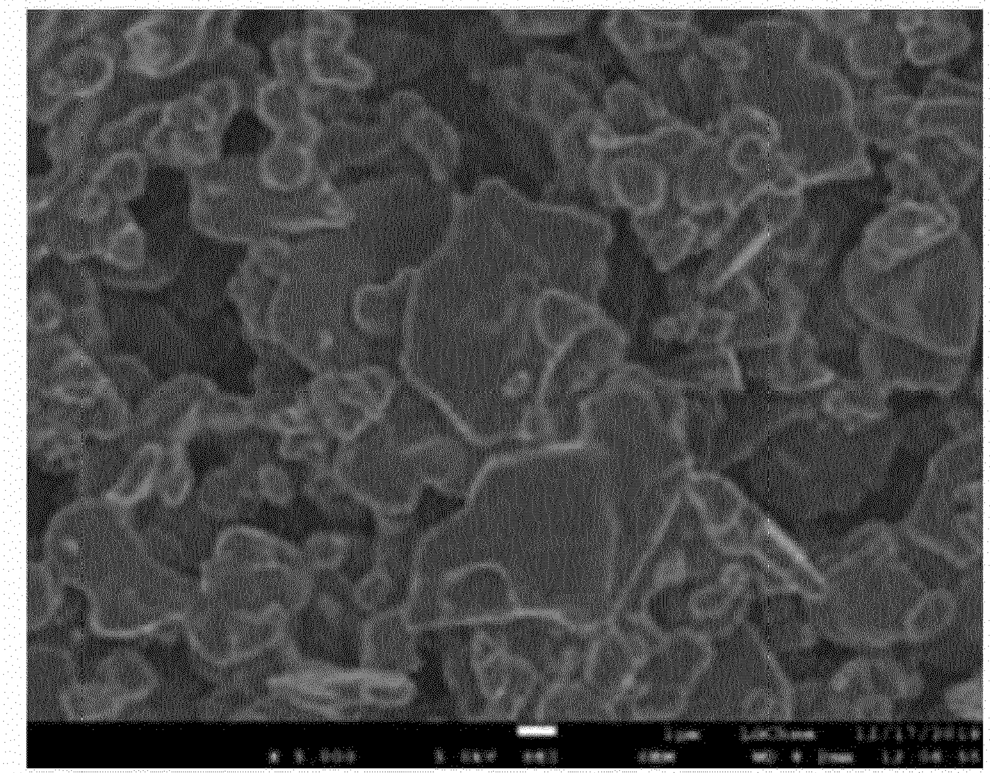

FIG. 1C

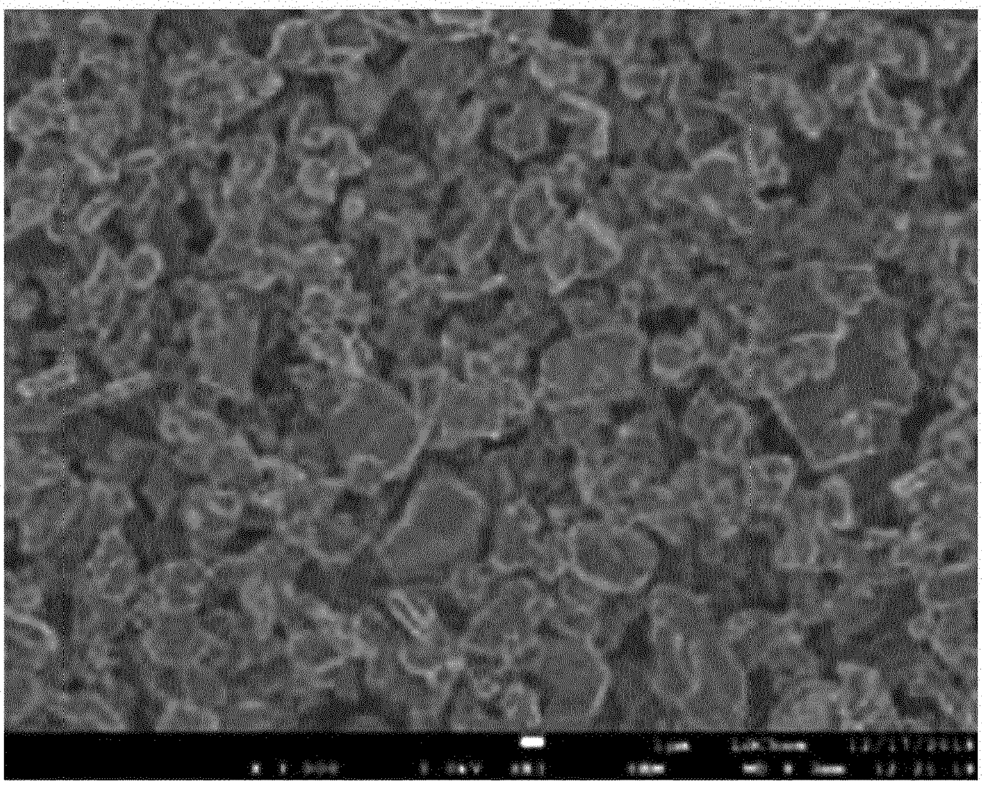

FIG. 1D

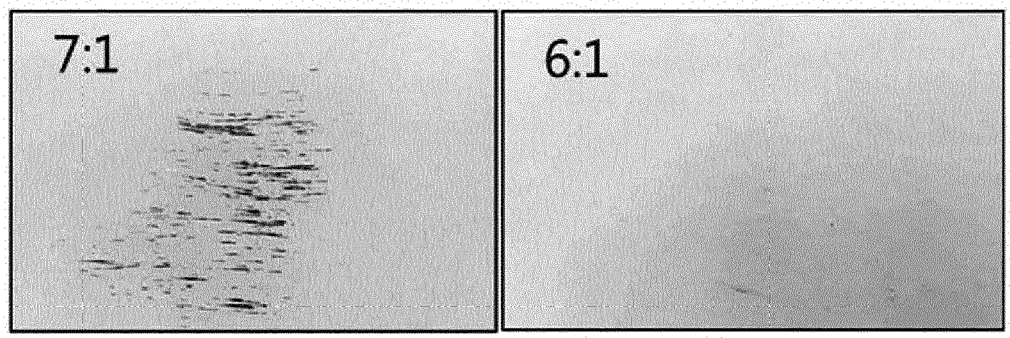

FIG. 1E

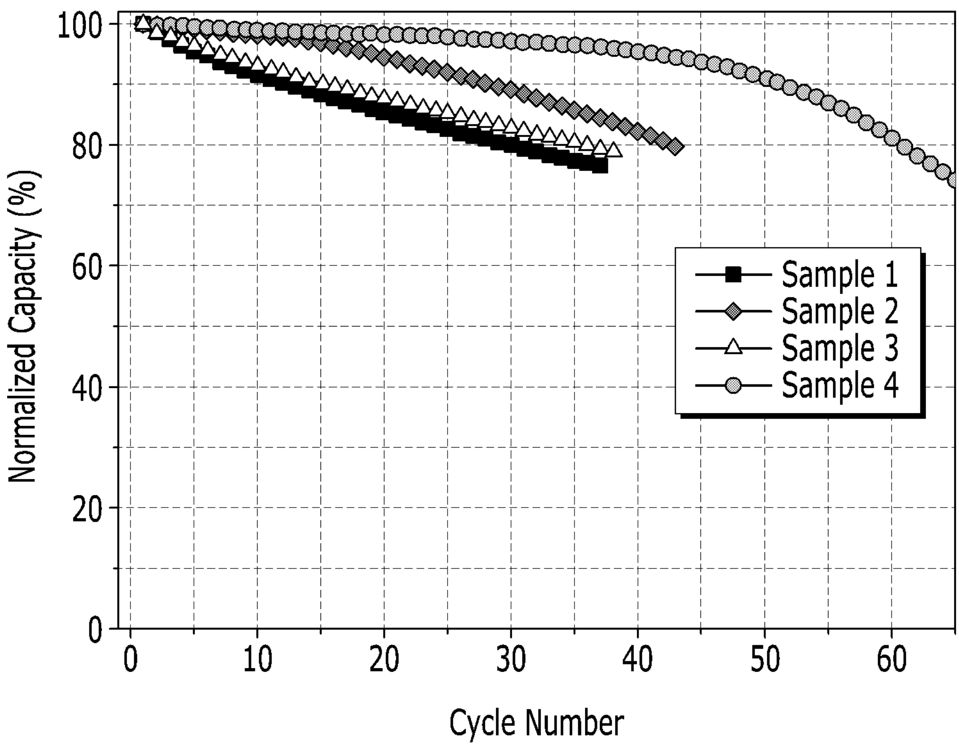
100
80
60
40
20
0
Normalized Capacity (%)
0
10
20
30
40
50
60
Cycle Number
Sample 1
Sample 2
Sample 3
Sample 4

FIG. 2

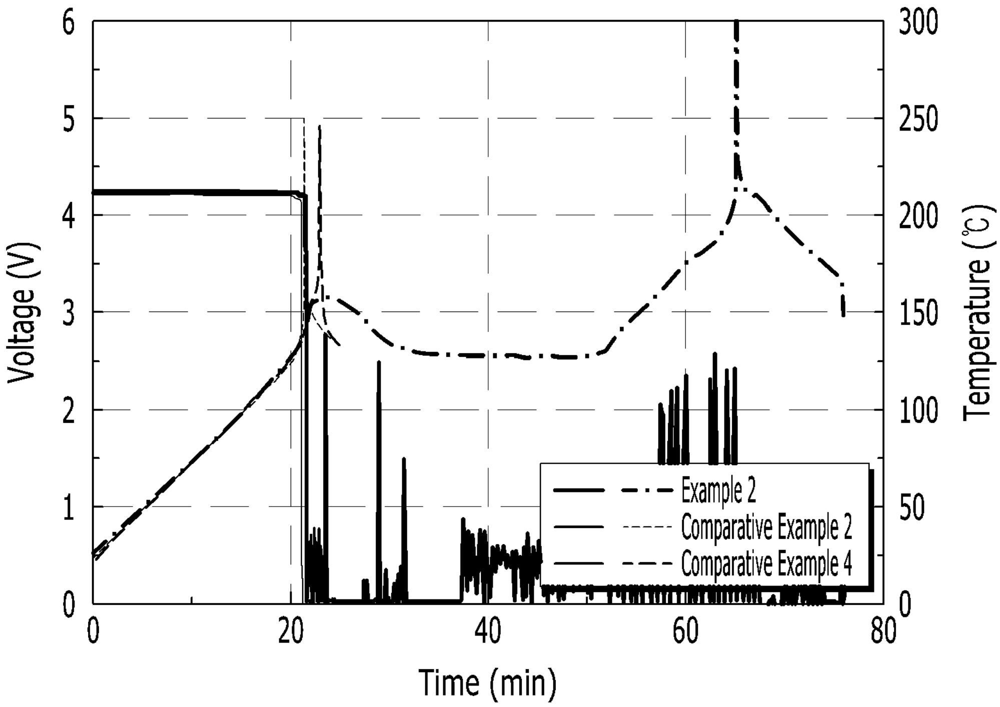
Voltage (V)
Temperature (℃)
Time (min)
Example 2
Comparative Example 2
Comparative Example 4
0
1
2
3
4
5
6
0
50
100
150
200
250
300
0
20
40
60
80

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020180077925
- KR 1020190078784
- US 2018040900 A